# EUROPEAN PATENT SPECIFICATION

(11) **EP 3 435 641 B1**
(45) Date of publication and mention of the grant of the patent: **15.04.2020**
(21) Application number: 17183387.4
(22) Date of filing: 26.07.2017
(51) Int. Cl.: H04M 1/725, H04M 19/04

(54) **ELECRONIC DEVICE, METHOD OF OPERATION AND COMPUTER PROGRAM**
ELEKTRONISCHE VORRICHTUNG, VERFAHREN ZUM BETRIEB UND COMPUTERPROGRAMM
DISPOSITIF ÉLECTRONIQUE, PROCÉDÉ DE FONCTIONNEMENT ET PROGRAMME INFORMATIQUE

(43) Date of publication of application: 30.01.2019
(73) Proprietor: Vestel Elektronik Sanayi ve Ticaret A.S., 45030 Manisa (TR)
(72) Inventor: ÖZBAY, Mustafa Caner, 45030 Manisa (TR)
(74) Representative: Flint, Adam

(56) References cited:
- EP-A1- 2 131 560
- WO-A1-2015/030642
- WO-A1-2016/019195
- US-A1- 2008 132 290

## Description

### Technical Field

The present disclosure relates to an electronic device, a method of operating an electronic device and a computer program.

### Background

Electronic devices, such as mobile phones, tablet computers etc., typically include one or more speakers that can output a particular audible sound, referred to as a ringtone, to notify a user to a corresponding function being performed by the electronic device. For example, a speaker on a mobile phone may play a ringtone to inform its user that the mobile phone is receiving a voice call (e.g. a telephone call) or that the mobile phone has received a text message. When a user hears the ringtone, the user knows that their mobile phone is performing the corresponding function and the user can then take the appropriate action such as answering the telephone call.

WO2016019195A1 discloses individualizing of ringtones. A first device identifies a second device that is within hearing range of the first device. The first device determines whether a ringtone of the first device conflicts with a ringtone of the second device. If the first device determines that there is a conflict (e.g., the active ringtones of the two devices have the same file name or the audio files of the ringtones have the same digital signature or identifier) then the first device appends an individualized alert to its ringtone, either in advance of playing the ringtone or in real time as the ringtone is being played.

US2008132290A1 discloses receiving a missed message signal and detecting an ambient noise level. When the ambient noise level is determined to be at least at a predetermined ambient noise threshold value, the missed message alert data is stored to wait for the ambient noise level to be low enough so that an annunciation of the missed message is audible over the ambient noise.

### Summary

According to a first aspect disclosed herein, there is provided an electronic device comprising: a data storage storing information on a ringtone assigned to the electronic device; a speaker for outputting the ringtone assigned to a function of the electronic device; a microphone for receiving sound of a ringtone output by another electronic device; and a controller configured to: compare the sound of a ringtone being output by another electronic device and received via the microphone with the ringtone assigned to the function of the electronic device; and cause an alert to be output by the electronic device when the ringtone output by a function of another electronic device is the same as the ringtone assigned to the function of the electronic device.

This allows the alert to settle any confusion that may be experienced by a user if they hear a ringtone that has been assigned to a particular function of their electronic device, such as receiving a voice call or a text message, because the user is immediately notified if the ringtone is being output from another user's electronic device rather than from their electronic device.

In an example, the controller is configured to cause the speaker to output the alert as a melody. In an example, the melody is a ringtone.

In an example, the electronic device comprises a vibrator and wherein the controller is configured to cause the vibrator to output the alert as one or more vibrations.

In an example, the function of the electronic device is informing a user that the electronic device is receiving a voice call. In an example, the voice call is received over a telecommunications network. In an example, the voice call is received over an Internet Protocol network, such as the Internet.

In an example, the controller is configured to cause the alert to be output when the ringtone being output by another electronic device is quiet or no ringtone is being output by the other electronic device.

According to a second aspect disclosed herein, there is provided a method of operating an electronic device, the method comprising: comparing the sound of a ringtone being output by another electronic device and received via a microphone of the electronic device with a ringtone assigned to a function of the electronic device; and causing an alert to be output by the electronic device when the ringtone output by another electronic device is the same as the ringtone assigned to the function of the electronic device.

In an example, the method comprises causing a speaker of the electronic device to output the alert as a melody.

In an example, the method comprises causing a vibrator to output the alert as one or more vibrations.

In an example, the function of the electronic device is informing a user that the electronic device is receiving a voice call.

In an example, the method comprises causing the alert to be output when the ringtone being output by another electronic device is quiet or no ringtone is being output by the other electronic device.

According to a third aspect disclosed herein, there is provided a computer program comprising instructions such that when the computer program is executed on a computing device, the computing device is arranged to carry out the above methods.

### Brief Description of the Drawings

To assist understanding of the present disclosure and to show how embodiments may be put into effect, reference is made by way of example to the accompanying drawings in which:
Figure 1 shows schematically a cross section of an example of an electronic device;
Figure 2 shows schematically a cross section of the electronic device shown in Figure 1 together with a cross section of another electronic device; and
Figure 3 shows an example of a method of operation of an electronic device.

### Detailed Description

Electronic devices, such as mobile phones, tablet computers etc., typically include one or more speakers that can output a particular audible sound, referred to as a ringtone, to notify a user to a corresponding function being performed by the electronic device. For example, a speaker on a mobile phone may play a ringtone to inform its user that the mobile phone is receiving a voice call (e.g. a telephone call) or that the mobile phone has received a text message. When a user hears the ringtone, the user knows that their mobile phone is performing the corresponding function and the user can then take the appropriate action such as answering the telephone call.

However, if a user is in a location in which other people with electronic devices are present, it is possible that a function of their electronic device may have been assigned the same ringtone as a function of an electronic device belonging to another user. This can cause confusion for the user because if they hear the ringtone, the user will assume that their electronic device is performing the corresponding function even when the ringtone is instead output from another user's electronic device.

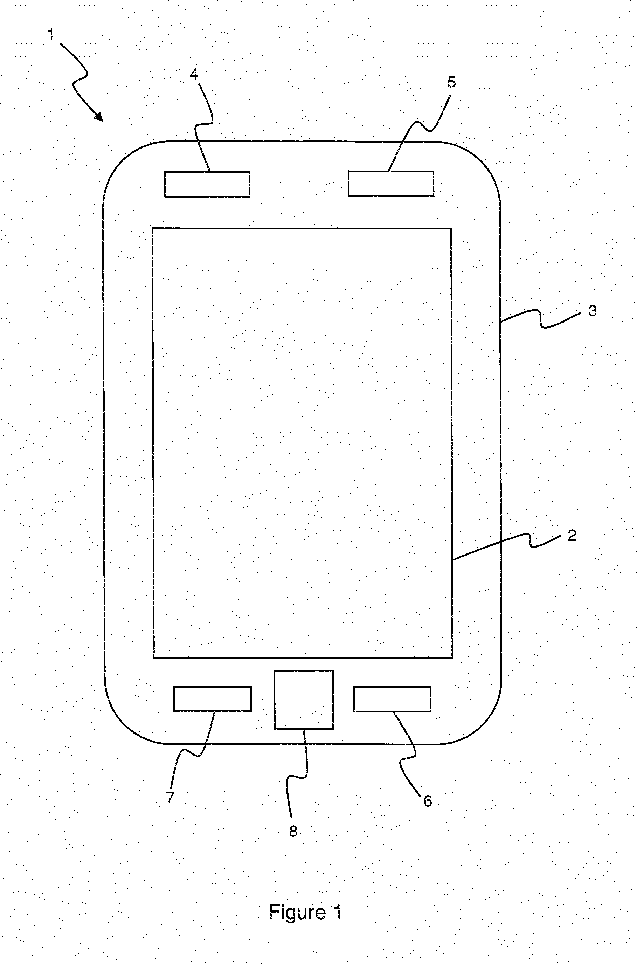

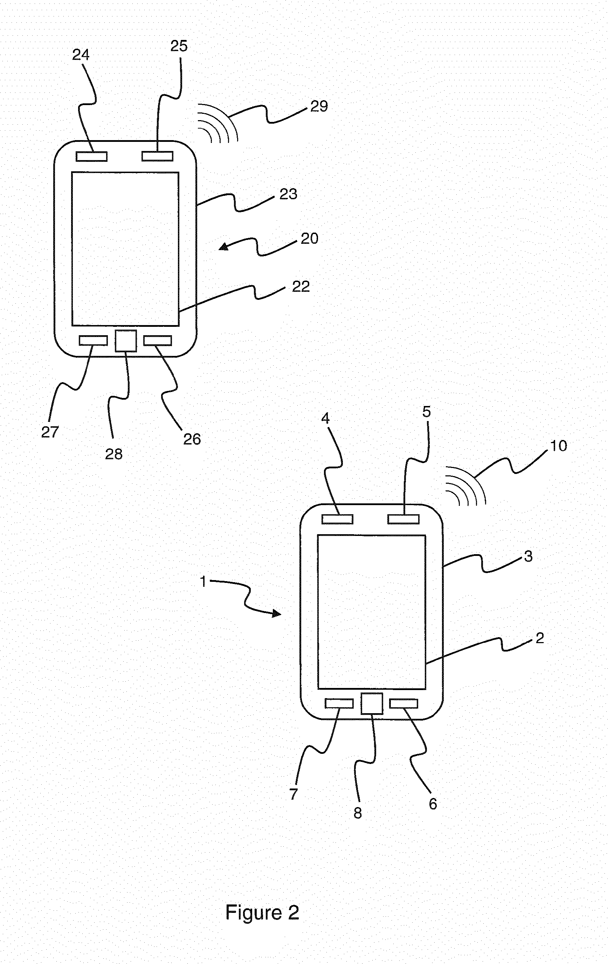

Referring now to Figures 1 and 2, there is shown schematically an example of an electronic device 1 including a touch screen 2 and a housing 3. In this example, the electronic device 1 is a telephone and, in particular, a mobile telephone or smartphone. In another example, the electronic device 1 is another device that can make and receive communications over a telecommunications network and/or an Internet Protocol network, such as the Internet. For example, the electronic device may be a tablet computer.

The electronic device 1 includes a data storage 4, a speaker 5, a microphone 6, a vibrator 7 and a controller 8.

The data storage 4 stores information on associations between functions of the electronic device 1 and ringtones. In particular, the data storage 4 stores information on one or more ringtones and on which ringtone is assigned to a particular function of the electronic device 1. Functions of the electronic device include receiving a voice call and receiving a text message, each of which may be delivered and received over a telecommunications network or over an Internet Protocol network, such as the Internet. The assignment of a ringtone to a particular function of the electronic device 1 is factory set but may subsequently be adjusted by a user.

The speaker 5 is constructed and arranged to output a ringtone assigned to a function of the electronic device 1. The speaker 5 may be for example a piezoelectric speaker.

The microphone 6 is constructed and arranged to receive sound of a ringtone output by another electronic device 1 located in the vicinity of the electronic device 1.

The vibrator 7 may be an eccentric rotating mass vibration motor, as is known in the art. The vibrator 7 is connected to an off-centre weight. When activated, the vibrator 7 spins the off-centre weight, which causes a vibration effect in the electronic device 1. As an alternative, the vibrator 7 may be a piezoelectric device or the like.

The controller 8, which may be a processor or the like, is provided within the housing 3 for controlling the operation of the electronic device 1. The controller 8 is connected to the data storage 4, the speaker 5, the microphone 6 and the vibrator 7. According to the invention, the controller 8 is configured to compare a ringtone 29 output by another electronic device 20 (see Figure 2), the sound of which is received by the microphone 6, with the ringtone assigned to a function of the electronic device 1. The controller 8 is also configured to cause an alert 10 to be output by the electronic device 1 when it detects that a ringtone 29 output by another electronic 20 device is the same as a ringtone assigned to a function of the electronic device 1. In this example, the alert 10 is an audible melody, such as a ringtone or the like, which the controller 8 causes to be output through the speaker 5. The particular melody is factory set but may subsequently be adjusted or changed by a user. In another example, the alert 10 may be one or more vibrations which the controller 8 causes to be output by the vibrator 7. In another example, the alert 10 may be a combination of a melody and one or more vibrations. In an example, the controller 8 is configured to cause the output of the alert 10 to synchronise with the ringtone 29 output by the other electronic device 20 such that the alert 10 is output when the ringtone 29 output by the other electronic device 20 is quiet or no ringtone 29 is being output by the other electronic device 20 (e.g. after each time the ringtone 29 has been output and before it is looped to sound again). To this end, the controller 8 may determine when the ringtone 29 being output by the other electronic device 20 is quiet or no ringtone is being output by the other electronic device 20 by analysing the information about the ringtone 29 of the other electronic device 20 stored on the data storage 4. In another example, the controller 8 may determine when the ringtone 29 the other electronic device 20 is quiet or silent by analysing the sound of the ringtone 29 received by the microphone 6.

The actions conducted by the controller 8 may be implemented in software, which can be obtained as a software application ("app") or as an update, which could be obtained, for example, as a download over, for example, the Internet. Alternatively, the software application could be installed at a factory in which the electronic device 1 is manufactured and/or incorporated into the firmware of the electronic device 1. The software and/or firmware may be stored on the data storage 4.

The other electronic device 20 shown in Figure 2 has the same features as the electronic device shown in Figure 1. Therefore, the other electronic device 20 is a mobile phone which includes a touch screen 22, a housing 23, a data storage 24, a speaker 25, a microphone 26, a vibrator 27 and a controller 28.

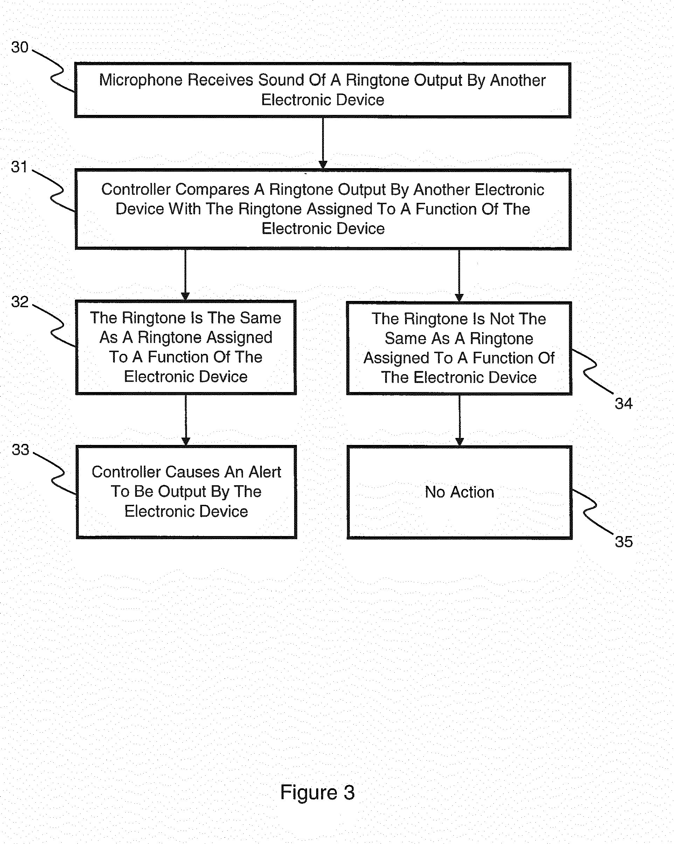

An example of a method of the controller 8 determining whether to cause an alert 10 to be output is shown in Figure 3.

Initially, a user carrying the electronic device 1 shown in Figure 1 is in the vicinity of another user carrying another electronic device 20. Each electronic device 1, 20 is a mobile phone and has been assigned the same ringtone that is output when the electronic device 1, 20 is receiving a voice call, which may be delivered and received over a telecommunications network or over an Internet Protocol network, such as the Internet.

At 30, the electronic device 20 belonging to the other user receives a voice call. In response, the electronic device 20 outputs a ringtone 29 to inform the other user of the voice call. The microphone 6 of the user's electronic device 1 detects the sound of the ringtone 29 output by the other electronic device 20.

At 31, the controller 8 compares the ringtone 29 output by the other electronic device 20 with the ringtones assigned to one or more functions of the electronic device. The controller 8 may compare the ringtone 29 output by the other electronic device 20 with the ringtones assigned to each function of the electronic device 1.

If, at 32, the controller 8 determines that the ringtone 29 output by the other electronic device 20 is the same as a ringtone assigned to a function of the electronic device 1, at 33 the controller 8 causes an alert 10 to be output by the electronic device 1. The alert 10 informs the user of the electronic device 1 that although the user can hear a ringtone assigned to a function of their electronic device 1, the ringtone is being output by an electronic device 20 belonging to another user rather than being output by their own electronic device 1. In this example, the alert 10 is an audible melody that the controller 8 causes to be output by the speaker 5.

Alternatively, if, at 34, the controller 8 determines that the ringtone 29 output by the other electronic device 20 is not the same as a ringtone assigned to a function of the electronic device 1, at 35, the controller 8 takes no further action in response to the microphone 6 detecting the sound of the ringtone 29 output by the other electronic device 20.

In this example, the ringtone 29 output by the other electronic device 20 is the same ringtone that is assigned to be output by the user's electronic device 1 when it receives a voice call. The controller 8 therefore recognises this and then immediately causes the speaker 5 of the electronic device 1 to output a melody to inform the user that although they can hear the sound of the ringtone that is assigned to be output when their electronic device 1 is receiving a voice call, the ringtone 29 that they can hear is being output by an electronic device 20 belonging to another user and they are not actually receiving a voice call.

An advantage of this arrangement is that the alert 10 settles any confusion that may be experienced by a user if they hear a ringtone that has been assigned to a particular function of their electronic device 1 because the user is immediately notified if the ringtone is being output from another user's electronic device 20 rather than from their electronic device 1.

Although at least some aspects of the examples described herein with reference to the drawings comprise methods performed in the controller/processor 8, the invention also extends to computer programs, particularly computer programs on or in a carrier or computing device, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium (e.g. the data storage 4), such as a solid-state drive (SSD) or other semiconductor-based RAM; a ROM, for example a CD ROM or a semiconductor ROM; a magnetic recording medium, for example a floppy disk or hard disk; optical memory devices in general; etc.

It will be understood that the controller/processor 8 referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments.

Reference is made herein to data storage 4 for storing data. This may be provided by a single device or by plural devices. Suitable devices include for example a hard disk and non-volatile semiconductor memory.

The examples described herein are to be understood as illustrative examples of embodiments of the invention. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. However, the scope of the invention is solely defined by the appended claims.

## Claims

1. An electronic device (1) comprising:
a data storage (4) storing information on a ringtone assigned to a function of the electronic device (1);
a speaker (5) for outputting the ringtone assigned to the function of the electronic device (1);
a microphone (6) for receiving sound of a ringtone (29) output by another electronic device (20); and
a controller (8) configured to: compare the sound of a ringtone (29) being output by another electronic device (20) and received via the microphone (6) with the ringtone assigned to the function of the electronic device (1); and cause an alert (10) to be output by the electronic device (1) when the ringtone (29) output by another electronic device (20) is the same as the ringtone assigned to the function of the electronic device (1).

2. An electronic device (1) according to claim 1, wherein the controller (8) is configured to cause the speaker (5) to output the alert (10) as a melody.

3. An electronic device (1) according to claim 1 or claim 2, comprising a vibrator and wherein the controller (8) is configured to cause the vibrator to output the alert (10) as one or more vibrations.

4. An electronic device (1) according to any preceding claim, wherein the function of the electronic device (1) is informing a user that the electronic device (1) is receiving a voice call.

5. An electronic device (1) according to any preceding claim, wherein the controller (8) is configured to cause the alert (10) to be output at a time when the ringtone (29) being output by another electronic device (20) is quiet or silent.

6. A method of operating an electronic device (1), the method comprising:
comparing the sound of a ringtone (29) being output by another electronic device (20) and received via a microphone (6) of the electronic device (1) with a ringtone assigned to a function of the electronic device (1); and
causing an alert (10) to be output by the electronic device (1) when the ringtone (29) output by another electronic device (20) is the same as the ringtone assigned to the function of the electronic device (1).

7. A method according to claim 6, comprising causing a speaker (5) of the electronic device (1) to output the alert (10) as a melody.

8. A method according to claim 6 or claim 7, comprising causing a vibrator to output the alert (10) as one or more vibrations.

9. A method according to any one of claims 6 to 8, wherein the function of the electronic device (1) is informing a user that the electronic device (1) is receiving a voice call.

10. A method according to any one of claims 6 to 9, comprising causing the alert (10) to be output at a time when the ringtone (29) being output by another electronic device (20) is quiet or silent.

11. A computer program comprising instructions such that when the computer program is executed on a computing device (1), the computing device (1) is arranged to carry out the method of any of claims 6 to 10.

## Patentansprüche

1. Elektronische Vorrichtung (1), umfassend:
einen Datenspeicher (4), der Informationen über einen Klingelton speichert, der einer Funktion der elektronischen Vorrichtung (1) zugeordnet ist;
einen Lautsprecher (5) zum Ausgeben des der Funktion der elektronischen Vorrichtung (1) zugeordneten Klingeltons;
ein Mikrofon (6) zum Empfangen des Klangs eines Klingeltons (29), der durch eine andere elektronische Vorrichtung (20) ausgegeben wird; und
eine Steuervorrichtung (8), die dazu eingerichtet ist: den Klang eines Klingeltons (29), der durch eine andere elektronische Vorrichtung (20) ausgegeben und über das Mikrofon (6) empfangen wird, mit dem der Funktion der elektronischen Vorrichtung (1) zugeordneten Klingelton zu vergleichen und zu veranlassen, dass durch die elektronische Vorrichtung (1) ein Alarm (10) ausgegeben wird, wenn der durch eine andere elektronische Vorrichtung (20) ausgegebene Klingelton (29) gleich dem der Funktion der elektronischen Vorrichtung (1) zugeordneten Klingelton ist.

2. Elektronische Vorrichtung (1) nach Anspruch 1, wobei die Steuervorrichtung (8) dazu eingerichtet ist, den Lautsprecher (5) zu veranlassen, den Alarm (10) als eine Melodie auszugeben.

3. Elektronische Vorrichtung (1) nach Anspruch 1 oder Anspruch 2, umfassend einen Vibrator und wobei die Steuervorrichtung (8) dazu eingerichtet ist, den Vibrator zu veranlassen, den Alarm (10) als eine oder mehrere Vibrationen auszugeben.

4. Elektronische Vorrichtung (1) nach einem vorhergehenden Anspruch, wobei die Funktion der elektronischen Vorrichtung (1) darin besteht, einen Benutzer darüber zu informieren, dass die elektronische Vorrichtung (1) einen Sprachanruf empfängt.

5. Elektronische Vorrichtung (1) nach einem vorhergehenden Anspruch, wobei die Steuervorrichtung (8) dazu eingerichtet ist, die Ausgabe des Alarms (10) zu einer Zeit zu veranlassen, wenn der durch eine andere elektronische Vorrichtung (20) ausgegebene Klingelton (29) leise oder stumm ist.

6. Verfahren zum Betreiben einer elektronischen Vorrichtung (1), wobei das Verfahren umfasst:
Vergleichen des Klangs eines Klingeltons (29), der durch eine andere elektronische Vorrichtung (20) ausgegeben und über ein Mikrofon (6) der elektronischen Vorrichtung (1) empfangen wird, mit einem einer Funktion der elektronischen Vorrichtung (1) zugeordneten Klingelton; und
Veranlassen, dass ein Alarm (10) durch die elektronische Vorrichtung (1) ausgegeben wird, wenn der durch eine andere elektronische Vorrichtung (20) ausgegebene Klingelton (29) gleich dem der Funktion der elektronischen Vorrichtung (1) zugeordneten Klingelton ist.

7. Verfahren nach Anspruch 6, umfassend das Veranlassen eines Lautsprechers (5) der elektronischen Vorrichtung (1), den Alarm (10) als eine Melodie auszugeben.

8. Verfahren nach Anspruch 6 oder 7, umfassend das Veranlassen eines Vibrators, den Alarm (10) als eine oder mehrere Vibrationen auszugeben.

9. Verfahren nach einem der Ansprüche 6 bis 8, wobei die Funktion der elektronischen Vorrichtung (1) darin besteht, einen Benutzer darüber zu informieren, dass die elektronische Vorrichtung (1) einen Sprachanruf empfängt.

10. Verfahren nach einem der Ansprüche 6 bis 9, umfassend das Veranlassen der Ausgabe des Alarms (10) zu einer Zeit, wenn der durch eine andere elektronische Vorrichtung (20) ausgegebene Klingelton (29) leise oder stumm ist.

11. Computerprogramm, umfassend Anweisungen, dergestalt dass beim Ausführen des Computerprogramms auf einer Rechenvorrichtung (1) die Rechenvorrichtung (1) dazu eingerichtet ist, das Verfahren nach einem der Ansprüche 6 bis 10 durchzuführen.

## Revendications

1. Dispositif électronique (1) comprenant :
un stockage de données (4) stockant des informations concernant une sonnerie attribuée à une fonction du dispositif électronique (1) ;
un haut-parleur (5) pour émettre la sonnerie attribuée à la fonction du dispositif électronique (1) ;
un microphone (6) pour recevoir un son d'une sonnerie (29) émise par un autre dispositif électronique (20) ; et
un dispositif de commande (8) configuré : pour comparer le son d'une sonnerie (29) qui est émise par un autre dispositif électronique (20) et reçue par le biais du microphone (6) avec la sonnerie attribuée à la fonction du dispositif électronique (1) ; et pour provoquer l'émission d'une alerte (10) par le dispositif électronique (1) lorsque la sonnerie (29) émise par un autre dispositif électronique (20) est la même que la sonnerie attribuée à la fonction du dispositif électronique (1).

2. Dispositif électronique (1) selon la revendication 1, dans lequel le dispositif de commande (8) est configuré pour amener le haut-parleur (5) à émettre l'alerte (10) sous la forme d'une mélodie.

3. Dispositif électronique (1) selon la revendication 1 ou la revendication 2, comprenant un vibreur et dans lequel le dispositif de commande (8) est configuré pour amener le vibreur à émettre l'alerte (10) sous la forme d'une ou de plusieurs vibrations.

4. Dispositif électronique (1) selon l'une quelconque des revendications précédentes, dans lequel la fonction du dispositif électronique (1) informe un utilisateur que le dispositif électronique (1) reçoit un appel vocal.

5. Dispositif électronique (1) selon l'une quelconque des revendications précédentes, dans lequel le dispositif de commande (8) est configuré pour provoquer l'émission de l'alerte (10) à un moment où la sonnerie (29) qui est émise par un autre dispositif électronique (20) est discrète ou silencieuse.

6. Procédé de fonctionnement d'un dispositif électronique (1), le procédé comprenant :
la comparaison du son d'une sonnerie (29) qui est émise par un autre dispositif électronique (20) et reçue par le biais d'un microphone (6) du dispositif électronique (1) avec une sonnerie attribuée à une fonction du dispositif électronique (1) ; et
la provocation de l'émission d'une alerte (10) par le dispositif électronique (1) lorsque la sonnerie (29) émise par un autre dispositif électronique (20) est la même que la sonnerie attribuée à la fonction du dispositif électronique (1).

7. Procédé selon la revendication 6, comprenant le fait d'amener un haut-parleur (5) du dispositif électronique (1) à émettre l'alerte (10) sous la forme d'une mélodie.

8. Procédé selon la revendication 6 ou la revendication 7, comprenant le fait d'amener un vibreur à émettre l'alerte (10) sous la forme d'une ou de plusieurs vibrations.

9. Procédé selon l'une quelconque des revendications 6 à 8, dans lequel la fonction du dispositif électronique (1) informe un utilisateur que le dispositif électronique (1) reçoit un appel vocal.

10. Procédé selon l'une quelconque des revendications 6 à 9, comprenant le fait de provoquer l'émission de l'alerte (10) à un moment où la sonnerie (29) qui est émise par un autre dispositif électronique (20) est discrète ou silencieuse.

11. Programme d'ordinateur comprenant des instructions de telle sorte que, lorsque le programme d'ordinateur est exécuté sur un dispositif informatique (1), le dispositif informatique (1) soit conçu pour mettre à exécution le procédé selon l'une quelconque des revendications 6 à 10.
